# EUROPEAN PATENT SPECIFICATION

(11) **EP 2 364 841 B1**
(45) Date of publication and mention of the grant of the patent: **05.04.2017**
(21) Application number: 10187908.8
(22) Date of filing: 18.10.2010
(51) Int. Cl.: B32B 5/22, B32B 11/10, E04C 2/20, E04C 2/22, E04C 2/24, E04D 3/35

(54) **Thermal insulation panel, particularly for the thermal insulation of buildings**
Wärmeisolierplatte, insbesondere zur Wärmeisolierung von Gebäuden
Panneau pour l'isolation thermique, en particulier pour l'isolation thermique dans des bâtiments

(30) Priority: 12.03.2010 IT TV20100017 U
(43) Date of publication of application: 14.09.2011
(73) Proprietor: Silcart S.p.A., 31030 Carbonera, Frazione Mignagola TV (IT)
(72) Inventor: Faotto, Ugo, 31100, Treviso (IT)
(74) Representative: Modiano, Micaela Nadia

(56) References cited:
- GB-A- 2 052 387
- GB-A- 2 055 326
- US-A- 5 206 068

## Description

The present invention relates to a thermal insulation panel particularly for the thermal insulation of buildings.

Currently, the essential layers that usually constitute the covering of a building are constituted substantially (starting from the inside outward) by a load-bearing structure (wooded floorboards or concrete floor slab), by a vapor barrier or vapor check, which is designed to prevent the passage of vapor (that arrives from the underlying layers of the building) and its subsequent condensation inside the upper layers, by an insulation layer for increasing thermal insulation (thermal insulation panel), by a waterproofing membrane to protect the underlying panel (tile backing), by one or more ventilation layers to adjust the hygrometric humidity conditions by means of air recirculation, and by the covering layer (bent tiles or cover tiles or the like).

On top of the panel, sheaths are applied by means of adhesive substances or by torching of the bitumen, or waterproofing (tile backing) sheets are applied by mechanical fixing.

The bases used traditionally to provide polyurethane panels are paper, bituminized feltpaper or paper, monobituminized fiberglass, mineralized fiberglass, aluminum, a multilayer film with paper, aluminum and plastic films in various combinations, as disclosed in EP1529895.

These bases are applied on the panel during the production of such panel (and therefore are not glued or applied at a later time), making it possible to contain the polyurethane foam during its expansion and giving dimensional stability to the finished product.

The two faces of the panel can be provided by means of the same base or with different bases, depending on the desired finishes.

Traditionally, bitumen of the oxidized type is used which has high ring & ball values (index of the temperature resistance of the compound) equal to 130-160°C and low penetration values (2-8 dmm) and is resistant to high temperatures but at the same time has an evident drawback, since it is very rigid and scarcely plastic; this drawback becomes evident especially due to limited flexibility during unrolling, with scaling and flaking especially at low temperature and as a consequence of aging.

These known types of solution have several drawbacks, which include a less than perfect adhesion between the surface of the panel and the sheath itself, which makes it necessary to insist excessively with heat and application of the torch, thus increasing emissions and/or the forming of carbon-containing compounds during the laying phases.

Moreover, a highly uneven and therefore not uniform distribution of said compound is observed on a fiberglass reinforcement, with a consequent increase in the weight of the panel and an increase in costs.

Moreover, in the background art the traditional monobituminized fiberglass base does not allow uniform and controlled evacuation of the gas and prevents the escape of such foam through the pores.

In the background art, moreover, there are bases for panels that can be made to pertain to the fire reaction class E according to the EN 13501-EN 11925 standard or B2 according to the DIN 4102-1 standard only with the addition of flame retardant additives, and less than optimum adhesion of the finish is observed, both in the case of non-woven fabrics and in the case of films or inert materials.

Finally, problems of delamination of the non-woven fabrics or of the films from the panels during production have been observed, and in any case such production is subject to machine downtimes and to the leakage of dust in the case of finishes with inert materials, which in turn cause problems of plant dirtying and healthiness for the operators, both in production and in the laying process.

GB-A-2052387 discloses a thermal insulating and bituminous waterproofing laminated board, comprising a bitumen board layer containing as a principle constituent a mixture of bitumen and at least one inorganic filler, a flat fibrous sheet laminated on each surface of the bitumen layer, and a thermal insulating material layer bonded, through the flat sheet, to one surface of the bitumen board layer.

GB-A-2055326 discloses a heat-insulating contruction board comprising a pre-weathered outer layer of waterproof material including a polymer-modified bitumen, and an inner layer of reinforced synthetic plastics having an inner surface profiled to conform to the profile of a surface to which the board is applied.

The aim of the present invention is to solve the above-mentioned technical problems, eliminating the drawbacks of the cited background art, by providing a panel that makes it possible to combine high temperature resistance with high plasticity and consequent flexibility of the base.

Within this aim, an object of the invention is to provide a panel that has high compatibility both with the bitumen sheathings that are applied on insulating panels by torching and with self-adhesive sheets or other polyolefin and/or thermoplastic sheaths of the TPO (thermoplastic elastomer-olefinic) type.

Another object of the invention is to allow the use of bitumen-polymer mixes, which are highly compatible with the bituminous compounds that constitute the sheathings, so as to allow perfect adhesion between the surface of the panel and the sheath itself, without the necessity of insisting excessively with heat and application of the torch, thus reducing emissions and/or the formation of carbon-containing compounds during the laying process.

Another object is to reduce the heat and application of the torch so as to allow less damage to the polyurethane (with the torch), ensuring the initial and desired values of heat conductivity and transmittance.

Another object is to obtain a panel that makes it possible to achieve an extremely uniform and homogeneous distribution of such compound on a fiberglass reinforcement, with a consequent increase in the lightness of the panel and a reduction in costs.

Another object is to provide a panel that has a superior porosity and permeability to air than the traditional monobituminized fiberglass base, allowing the evacuation of the gas that is released but at the same time preventing the escape of the foam through the pores.

Another object is to provide the production of a flexible base for panels that belongs to the fire reaction class E according to the EN 13501-EN 11925 standard or B2 according to the DIN 4102-1 standard, without the addition of flame retardant additives.

Another object is to provide a panel that makes it possible to achieve optimum adhesion of the finish both in the case of non-woven fabrics and in the case of films or inert materials.

Another object is to provide a panel that does not have problems of delamination of the non-woven fabrics or of the films from the panels during production.

Another object is to provide a panel that does not have problems of machine downtime and leakage of dust in the case of finishes with inert materials, which cause problems of plant dirtying and of healthiness to operators both in production and during the laying process.

Another object is to obtain a panel that is structurally simple, has low manufacturing costs and can be provided with the commonly known plants.

In accordance with the invention, there is provided a thermal insulation panel as defined in the appended claims.

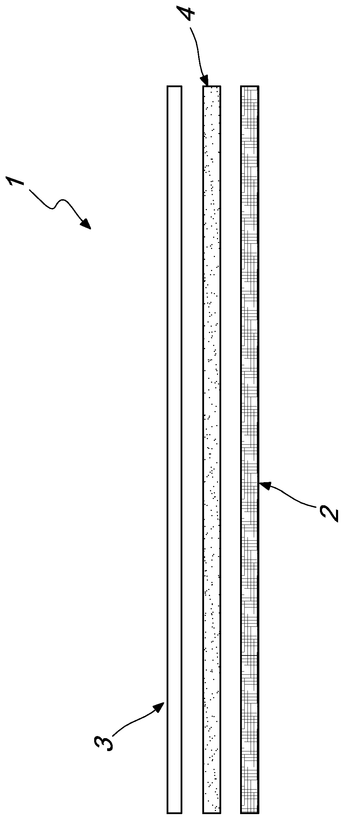

Further characteristics and advantages of the invention will become better apparent from the following detailed description of a particular but not exclusive embodiment, illustrated by way of non-limiting example in the accompanying drawings, wherein the sole Figure is an exploded view of the components of the panel.

In the exemplary embodiments that follow, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

With reference to the figures, the reference numeral 1 designates a thermally insulating panel, particularly for the thermal insulation of buildings, which is made of expanded polyurethane and wherein one or both faces are provided by means of a flexible base composed of a first layer 2 constituted by a fiberglass reinforcement or a reinforcement made of hybrid glass or natural, mineral and/or synthetic mixed fibers and a second layer 3 constituted by a non-woven fabric made of polypropylene, weft-warp fabric, plastic film made of PE (polyethylene) or PET (polyethylene terephthalate or polyester), glass mesh, polypropylene or inert materials as a finish.

An elastoplastomeric bitumen-polymer bituminous mix 4, also referred to hereinafter as a "compound", is interposed between the first and second layers 2, 3 and is spread on one side of the first layer 2.

The mix 4 is provided by means of the combination of distilled bitumen and polymers in selected proportions, so as to obtain a compound that has both the requirements of temperature resistance needed for flexible bases for panels and a series of additional innovative characteristics described hereinafter.

The typical composition of the elastoplastomeric bitumen-polymer bituminous mix 4 is indicated in the examples that follow, which are given in the continuation by way of non-limiting example; a legend is further given for the acronyms used: PIR (polyisocyanurate), PUR (polyurethane), PET (polyethylene terephthalate-polyester), PP (polypropylene), PE (polyethylene), LDPE (low-density polyethylene), HDPE (high-density polyethylene), SBS (styrene-butadiene-styrene), CaCO3 (calcium carbonate), EVA (ethylene vinyl acetate), EVOH (ethylene vinyl alcohol), EPDM (ethylene propylene diene monomer).

### EXAMPLE 1

Distilled bitumen (penetration 60-400 dmm): 40-80%
PP (IPP and/or APP): 5-15%
PE (LDPE and/or HDPE): 5-15%
SBS:5-10%
CaC03: 10-40%

It is also possible to use EVA (1-5%), EVOH (1-5%), EPDM (1-5%), generic polyolefins.

Some of these components can be made from recycled material or biopolymers.

### EXAMPLE 2

Distilled bitumen: 60%
IPP: 5%
APP: 4%
LDPE: 1%
HDPE: 7%
SBS: 1%
CaCO3: 22%

### EXAMPLE 3

Distilled bitumen: 55%
IPP: 5%
APP: 3%
LDPE: 1%
HDPE: 6.2%
SBS: 1.5%
CaCO3: 30%

### EXAMPLE 4

Distilled bitumen: 67%
IPP: 1.5%
APP: 2.5%
LDPE: 0.5%
HDPE: 4.5%
CaCO3: 24%

### EXAMPLE 5

Distilled bitumen: 50%
IPP: 3%
APP: 2.5%
LDPE: 1%
HDPE: 5.5%
CaCO3: 38%

The characteristic parameters of the elastoplastomeric bitumen-polymer bituminous mix 4 are the following:
ring & ball (index of the temperature resistance of the compound, important because the base must not undergo variations-deformations during the exothermic reaction of expansion of the foam that occurs during the production of the panels): 100-150°C, ASTM D36-95 standard;
penetration (index of plasticity and ductility of the bituminous compound): 8-40 dmm, ASTM D5-05a standard.

These characteristics, with respect to the oxidized bitumen used traditionally, make it possible to combine high temperature resistance with high plasticity and consequent flexibility of the base.

The elastoplastomeric compound 4 presents high compatibility with bitumen sheathings, which are applied over the insulating panels by torching, and with self-adhesive sheathings or other polyolefin and/or thermoplastic sheathings of the TPO (thermoplastic elastomer-olefinic) type.

The use of the elastoplastomeric bitumen-polymer bituminous mix 4, which is highly compatible with the bituminous compounds that constitute the sheathings, allows perfect adhesion between the surface of the panel and the sheath, without the need to insist excessively with the heat and application of the torch, thus reducing emissions and/or the formation of carbon-containing compounds during the laying phases.

Furthermore, by reducing the heat and the application of the torch, the polyurethane is damaged less (with the torch), ensuring the initial and desired values of heat conductivity and transmittance.

Moreover, the elastoplastomeric bitumen-polymer bituminous mix 4 makes it possible, by means of the interaction between the polymers and the bitumen and the interaction of the bitumen with the fiberglass, to obtain a distribution of such compound on the fiberglass reinforcement that is extremely uniform and homogeneous, with two important advantages: the base for the panel has a lower final gram weight, with equal characteristics, than the traditional monobituminized fiberglass base, with a consequent increase in the lightness of the panel and a reduction in costs.

Furthermore, the base for the panel has a porosity and permeability to air that are higher than the traditional monobituminized fiberglass base.

The datum of permeability to air is extremely important for bases during the production of polyurethane panels, since during the steps of expansion of the polyurethane foam the base must allow the evacuation of the gas that is released (avoiding the formation of bubbles within the panel, which would impair heat conductivity); but at the same time it must prevent the outflow of such foam through the pores.

In the panel 1 thus obtained, the fine perforations that are present have small dimensions and a perfect and uniform distribution, which is ensured by the bituminous compound 4 and, thanks to the plastic film created by the bituminous compound 4, generate an interaction with the polyurethane foam that prevents its escape through the base despite allowing excellent permeability to air with values of 3-35 1/m2/s (UNI EN ISO 9237 standard; P=100 Pa).

The elastoplastomeric bitumen-polymer bituminous mix 4 makes it possible to obtain a flexible base for panels that belongs to fire reaction class E according to the EN 13501-EN 11925 standard or B2 according to the DIN 4102-1 standard without the addition of flame retardant additives.

The elastoplastomeric bitumen-polymer bituminous mix 4 makes it further possible to obtain an optimum adhesion of the finish (see Example 4), both in the case of non-woven fabrics and in the case of films or inert materials.

This entails the absence of problems of delamination of non-woven fabrics or of films from the panels during their production, cutting or laying processes (with consequent machine downtime problems) and the absence of leaks of dust in the case of finishes with inert materials, which cause problems of plant dirtying and healthiness to operators, both during production and during the laying process.

In practice it has been found that the invention achieves the intended aim and objects described above.

The materials used, as well as the dimensions that constitute the individual components of the invention, may of course be more pertinent to specific requirements.

The various means for performing certain different functions need not certainly coexist only in the illustrated embodiment but can be present per se in many embodiments, including embodiments that are not illustrated.

The characteristics indicated as advantageous, convenient or the like may also be omitted or be replaced with equivalents.

The disclosures in Italian Utility Model Application No. TV2010U000017 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A thermal insulation panel (1), particularly for the thermal insulation of buildings, made of expanded polyurethane, wherein one or both faces are provided by means of a flexible base composed of a first layer (2) constituted by a reinforcement made of fiberglass or a reinforcement made of hybrid glass or mixed natural, mineral and/or synthetic fibers, and a second layer (3) constituted by a non-woven fabric made of polypropylene, weft-warp fabric, plastic film made of PE (polyethylene) or PET (polyethylene terephthalate or polyester), glass mesh, polypropylene or inert materials as a finish, an elastoplastomeric bitumen-polymer bituminous mix (4) being interposed between said first and second layers and being spread on one side of said first layer (2), said elastoplastomeric bitumen-polymer bituminous mix (4) being composed of:
distilled bitumen (penetration 60-400 dmm): 40-80%, PP (IPP and/or APP): 5-15%, PE (LDPE and/or HDPE): 5-15%, SBS: 5-10%, CaC03:10-40%; or
distilled bitumen: 60%, IPP: 5%, APP: 4%, LDPE: 1%, HYPE: 7%, SBS: 1%, CaCO3: 22%; or
distilled bitumen: 55%, IPP: 5%, APP: 3%, LDPE: 1%, HDPE: 6.2%, SBS: 1.5%, CaCO3: 30%; or
distilled bitumen: 67%, IPP: 1.5%, APP: 2.5%, LDPE: 0.5%, HDPE: 4.5%, CaCO3: 24%; or
distilled bitumen: 50%, IPP: 3%, APP: 2.5%, LDPE: 1%, HDPE: 5.5%, CaCO3: 38%.

2. The panel according to claim 1, **characterized in that** said elastoplastomeric bitumen-polymer bituminous mix (4) is composed of:
distilled bitumen (penetration 60-400 dmm): 40-80%, PP (IPP and/or APP): 5-15%, PE (LDPE and/or HDPE): 5-15%, SBS: 5-10%, CaCO3:10-40%; and
EVA (1-5%), EVOH (1-5%), EPDM (1-5%), and polyolefins being also used.

## Patentansprüche

1. Eine Wärmeisolierungspaneel (1), insbesondere für die Wärmeisolierung von Gebäuden, hergestellt aus aufgeschäumtem Polyurethan, worin eine oder beide Seitenflächen bereitgestellt werden durch eine flexible Basis bestehend aus einer ersten Schicht (2) gebildet durch eine Verstärkung hergestellt aus Fiberglas oder eine Verstärkung hergestellt aus Hybridglas oder gemischten natürlichen, mineralischen und/oder synthetischen Fasern, und einer zweiten Schicht (3) gebildet durch einen nicht-gewebten Stoff hergestellt aus Polypropylen, Kette- und Schuss-Stoff, Plastikfilm hergestellt aus PE (Polyethylen) oder PET (Polyethylenterephthalat oder Polyester), Glasgitter, Polypropylen oder inerte Materialien als ein Finish, eine elastoplastomere Bitumen-Polymer bituminöse Mischung (4), die zwischen die erste und zweite Schicht eingeschoben ist und die auf eine Seite der ersten Schicht (2) verteilt ist, wobei die elastoplastomere Bitumen-Polymer bituminöse Mischung (4) aus Folgendem besteht:
destilliertem Bitumen (Penetration 60-400 dmm): 40-80%, PP (IPP und/oder APP): 5-15%, PE (LDPE und/oder HDPE): 5-15%, SBS: 5-10%, CaCO3:10-40%; oder
destilliertem Bitumen: 60% IPP: 5%, APP: 4%, LDPE: 1%, HDPE: 7%, SBS: 1%, CaCO3: 22%; oder
destilliertem Bitumen: 55%, IPP: 5%, APP: 3%, LDPE: 1% HDPE: 6,2%, SBS: 1,5%, CaCO3: 30%; oder
destilliertem Bitumen: 67%, IPP: 1,5%, APP: 2,5%, LDPE: 0,5%, HDPE: 4,5%, CaCO3: 24%; oder
destilliertem Bitumen: 50%, IPP: 3%, APP: 2,5%, LDPE: 1% HDPE: 5,5%, CaCO3: 38%.

2. Das Paneel gemäß Anspruch 1, **dadurch gekennzeichnet, dass** die elastoplastomere Bitumen-Polymer bituminöse Mischung (4) aus Folgendem besteht:
destilliertem Bitumen (Penetration 60-400 dmm): 40-80%, PP (IPP und/oder APP): 5-15%, PE (LDPE und/oder HDPE): 5-15%, SBS: 5-10%, CaCO3:10-40%; und
EVA (1-5%), EVOH (1-5%), EPDM (1-5%), und Polyolefinen, die auch verwendet werden.

## Revendications

1. Panneau d'isolation thermique (1), destiné en particulier à l'isolation thermique de bâtiments, fait de polyuréthane expansé, dans lequel l'une des faces ou les deux est ou sont réalisée(s) au moyen d'une base flexible composée d'une première couche (2), constituée d'un renfort en fibres de verre ou d'un renfort en verre hybride ou en un mélange de fibres naturelles, minérales et/ou synthétiques, et d'une deuxième couche (3), constituée d'un non-tissé en polypropylène, d'un tissé à trame et chaîne, d'un film plastique en PE (polyéthylène) ou en PET (poly(éthylène téréphtalate) ou polyester), d'un maillé de verre, de polypropylène ou de matériaux inertes, en tant que finissage, étant entendu qu'un mélange bitumineux (4) de bitume et de polymère élasto-plastomère est interposé entre lesdites première et deuxième couches et étalé sur un côté de ladite première couche (2), lequel mélange bitumineux (4) de bitume et de polymère élasto-plastomère se compose :
- de 40 à 80 % de bitume distillé (pénétration : 6 à 40 mm), 5 à 15 % de PP (PPi, isotactique, et/ou PPa, atactique), 5 à 15 % de PE (PEbd et/ou PEhd), 5 à 10 % de SBS, et 10 à 40 % de CaCO₃ ;
- ou de 60 % de bitume distillé, 5 % de PPi, 4 % de PPa, 1 % de PEbd, 7 % de PEhd, 1 % de SBS, et 22 % de CaCO₃ ;
- ou de 55 % de bitume distillé, 5 % de PPi, 3 % de PPa, 1 % de PEbd, 6,2 % de PEhd, 1,5 % de SBS, et 30 % de CaCO₃ ;
- ou de 67 % de bitume distillé, 1,5 % de PPi, 2,5 % de PPa, 0,5 % de PEbd, 4,5 % de PEhd, et 24 % de CaCO₃ ;
- ou de 50 % de bitume distillé, 3 % de PPi, 2,5 % de PPa, 1 % de PEbd, 5,5 % de PEhd, et 38 % de CaCO₃.

2. Panneau conforme à la revendication 1, **caractérisé en ce que** ledit mélange bitumineux (4) de bitume et de polymère élasto-plastomère se compose :
- de 40 à 80 % de bitume distillé (pénétration : 6 à 40 mm), 5 à 15 % de PP (PPi et/ou PPa), 5 à 15 % de PE (PEbd et/ou PEhd), 5 à 10 % de SBS, et 10 à 40 % de CaCO₃,
et **en ce que** l'on y utilise également 1 à 5 % d'EVA, 1 à 5 % d'EVOH et 1 à 5 % d'EPDM, ainsi que des polyoléfines.
